# EUROPEAN PATENT SPECIFICATION

(11) **EP 2 736 027 B1**
(45) Date of publication and mention of the grant of the patent: **23.05.2018**
(21) Application number: 12194305.4
(22) Date of filing: 26.11.2012
(51) Int. Cl.: G08B 7/06, G01C 21/20

(54) **METHOD AND SYSTEM FOR EVACUATION SUPPORT**
VERFAHREN UND SYSTEM ZUR UNTERSTÜTZUNG DER EVAKUIERUNG
PROCÉDÉ ET SYSTÈME DE SUPPORT D'ÉVACUATION

(43) Date of publication of application: 28.05.2014
(73) Proprietor: AGT International GmbH, 8050 Zurich (CH)
(72) Inventor: Kikiras, Panayotis, 1050 Brussels (DE); Leonardi, Alessandro, 64293 Darmstadt (DE)
(74) Representative: Taor, Simon Edward William

(56) References cited:
- US-A1- 2010 057 354
- US-A1- 2010 309 004
- US-A1- 2011 161 239
- US-A1- 2011 172 906

## Description

The present invention generally relates to electronic data processing, and more particularly, relates to methods, computer program products and systems for exit routing.

### Background

Many public areas, such as for example, airports, amusement parks, large public buildings or premises (e.g., technology parks, university campuses, etc.), are typically populated with people and provide pre-set evacuation plans for emergency situations. Emergency situations in such populated areas can be caused by fire, earthquake, gas leakage, terroristic attacks or any other situation which requires the evacuation of people populating the area. For example, for the evacuation of buildings typically floor-plans and escape signs attached on the walls show the nearest available building exits to be used when an emergency situation occurs.

After an incident occurs, the expectation is that the occupants look at the evacuation plan (or escape signs on the floor/walls) and reach the nearest exit. However, the actual effectiveness of any pre-set evacuation plan can be limited by several issues: the impossibility for occasional visitors (e.g., customers) to know (or look at) the evacuation plan/signs; the unpredictability of people behaviour in panic conditions; the lack of information about the type of emergency, the number and distribution of people inside the building.

Current evacuation algorithms usually rely on complex graphs and suffer from high computational cost. Moreover, they may not scale up in urban scenarios with large buildings and huge complexes.

US 2010/309004A1 discloses an evacuation system and route indicator in which an object, for example a building, is divided into different sections. Each section comprises a plurality of computers, each controlling an individual escape route display or a group of escape route displays. The computers are controlled by monitoring sensors of the object section. The blueprint of the object section and a control algorithm for the safest escape route from the object section is stored in the computers. An escape route display can be used.

US 2010/057354A1 discloses a method of route retrieval comprising initializing a first weighted graph, converting a blueprint of an area into a weighted graph, updating the weighted graph in real time, and calculating an optimal route in the area.

### Summary

There is a need to improve computer systems for supporting evacuation of populated areas to notify people about the safest way to reach an exit. Prior art systems typically suggest only the shortest escape path, which may actually get people closer to the most dangerous or hazardous locations in the populated area. However, the safest escape route can dynamically change according to people locations and hazard locations.
The present invention provides a computer implemented method, a distributed computer program product and a computer system as defined in the claims which follow.

Aspects of the inventions allow increasing the possibilities of a safe and successful escape by dynamically calculating exit routes from the populated area using a decentralized computer system. Multiple parameters may influence the calculation of the safest exit path. Examples of such parameters are: location and type of emergency/danger, number of people to evacuate and their respective locations, prioritization of people according to their current status (e.g., mental and motor capabilities, injuries, etc). For this purpose, sensors distributed in or around the populated area can help to gain a better understanding of the current situation in the populated area and allow intelligent evacuation.

Aspects of the invention according to the independent claims address such issues with computer implemented method, computer program products and computer systems for running said computer program to execute said method. Various computer programs being run by various computer components of the computer system may be considered as a distributed computer program product, where different functions of the computer program product are deployed on various computers.

In one aspect, a computer system supports the evacuation of a populated area. The computer system includes a first computer configured to store a first graph representing a first physical zone in the populated area. The graph may be stored in any appropriate memory component of the first computer. The first physical zone may be, for example, a floor in a multi-story building, a terminal of an airport, a part of an airport terminal (e.g., waiting zone, baggage check, passenger control, etc.), a theme area in an amusement park or any other sub-area of some larger area. The first graph may include nodes and edges. The nodes may for example correspond to physical elements of the first zone, such as, offices, fire safe rooms, exits, open spaces, etc. The edges may represent possible physical connections between the physical elements, where a person can move from one location represented by a first node to another location represented by a second node. The first graph has at least one first exit node, which corresponds to at least one exit from the first physical zone. That is, the first physical zone has one or more physical exit points such as, a staircase, an elevator, a door or window (e.g., on the ground floor), a gate, a bridge, etc. Such real exit points are represented by respective first exit nodes in the first graph.

The computer system further includes a second computer configured to store a second graph representing a second physical zone in the populated area. The second graph also has at least one second exit node, which corresponds to at least one real world exit from the second physical zone. The first and the second graphs are associated through exit nodes. A first exit node may, for example, correspond to a staircase exit on one floor of a building. The staircase may connect two floors of the building. That is, a second exit node corresponding to a staircase exit to the same staircase on another floor is associated with the respective first exit node. In other words, respective first and second exit nodes connect the first and second graphs. That is, exit nodes of the first graph having a logical counterpart in the second graph are nodes, which can be used to navigate people through the populated area because they represent real world connections of the respective physical zones.

The computer system may include further computers for further physical zones, which are configured in a similar way as the first and second computers.

The computer system further has at least one interface component, which is configured to receive sensor data representative of the situation in the populated area. Such a situation may be characterized by an already existing hazard or danger (e.g., a fire) or even by a potential threat (e.g., smoke in a building). Further the situation may be characterized by a distribution of people in the populated area, especially in the vicinity of a potentially hazardous location. That is, sensor data may indicate that no anomalies exist in the area or they may indicate a hazardous situation in the populated area and provide information about people in the area who may be affected by the situation. Any computer of the computer system may have such a sensor data interface and receive corresponding sensor data. Sensors connected to the at least one interface component can monitor parameters, such as, for example, gas leakage, chemical and biological agents, earth movements, smoke, fire or heat, which can be used to detect a hazardous situation in the populated area. Examples of commercially available sensors, which can be used for such purposes, are smoke detectors, temperature sensors, camera sensors, motion sensors, gas sensors, gravity sensors, etc. Moreover, sensors detecting movement, room occupancy and number of people inside rooms of the building can be placed accordingly in the building or in the populated area in general. The sensors can be connected to the respective interface component through standard wireless or wired networks.

The computer system further has an area computer configured to calculate an area exit path. The area computer is communicatively coupled with the first and second computers. It may also have an interface component to receive sensor data. There may be sensors which are placed in connecting elements (e.g., staircase, elevator) connecting two physical zones. Such sensors may provide information to the area computer to which extent such a connecting element may be safely used by people occupying any one of the respective physical zones. For example, if two floors of a building are connected through two staircases and one elevator, there are three pairs of first and second exit nodes, which represent connecting elements for the first and second physical zones. If a smoke detector in combination with a temperature sensor indicates that there is a fire in one of the staircases, the area computer can exclude the burning staircase from potential escape or exit routes. At the same time, the system may conclude that, in case of fire, elevators must not be used and, therefore, may also exclude the elevator connecting element from the potential exit routes. The area exit path calculation is thus based on the sensor data and the connected first and second exit nodes (connecting elements). It may further be based on considerations about the capacity of a potential exit path. A staircase may have a capacity of thirty people per minute whereas an elevator may have a capacity of only eight people in two minutes. The area exit path is may determined by using an area graph which includes all relevant exit nodes of the physical zones in the populated area. The edges of the graph correspond to the path elements from one exit node to another exit node. By using sensor data providing information about safe passage properties of the connecting elements, the area computer can provide potential exit nodes to the respective first and second computers. Capacity information about various available safe connecting elements may further provide relevant input information for the first and second computers to determine evacuation routes at the physical zone level.

The first and second computers receive the area exit path(s) from the area computer and are therefore aware of any potential safe exit from the respective physical zone. Using this information they can determine a first exit path from the first graph and a second exit path from the second graph, respectively, based on the sensor data and the area exit path. The first and second computers can both receive sensor data from sensors which are placed to monitor the respective physical zone. This allows to further taking into account the local situation in each physical zone. Capacity information regarding the various available exit nodes may be taken into account by using a capacity-constrained routing algorithm for determining an exit path for the respective physical zone. Taking into account the capacity of the various edges of the graph can improve the safe exit path calculation because the system can ensure that no blocking of exits by too many people will occur because people are route through the physical zone in packages according to the available capacity. Routing algorithms taking into account different priorities have been widely studied for transferring data packets in wireless networks (especially in wireless sensor networks). When dealing with routing, people can be treated like data packets. The following sources may be considered by a person skilled in the art with regards to potential capacity-constrained routing algorithms: Erol Gelenbe, Edith Ngai and Poonam Yadav. "Routing of high priority packets in wireless sensor networks". In Proceedings of the SPIE Defense, Security, and Sensing (SPIE DSS'09), Orlando, Florida, USA, April 2009; Babak Farzad, Neil Olver and Adrian Vetta, "A Priority-Based Model of Routing", Chicago Journal of Theoretical Computer Science, 2008 (1); and S. Yousaf Shah and Boleslaw K. Szymanski, "Dynamic Multipath Routing of Multi-Priority Traffic in Wireless Sensor Networks," Proc. ACITA 2012, Southampton, UK, September 19, 2012, Southampton, UK, September 18-20, 2012.

In other words, each computer, which receives the safe exit information from the area computer, can now determine one or more safe exit paths for the respective physical zone without any interference with the other computers. This enables fast calculation of exit paths at the physical zone level because a graph for one physical zone is less complex than a graph for representing the whole populated area and can thus be processed faster than a complex graph representing the whole populated area. In case of a situational change (e.g., strong smoke development in a certain part of the physical zone) regarding available exit nodes a recalculation can be performed in almost real-time because it only requires a recalculation for the physical zone affected by the change. Moreover, each computer can use a routing algorithm which is appropriate for the physical zone. For example, a physical zone hosting an office space may require another routing algorithm than a physical zone which hosts an adventure land in an amusement park.

The decentralized architecture of the computer system therefore increases the computational efficiency of exit path determination by using a plurality of less complex physical zone graphs leading to faster recalculation in case of situational changes when comparing to a recalculation of a complete area graph. The exit path calculation at the physical zone level may be further optimized by using different optimized routing algorithms for different physical zones, which is not possible in a monolithic area graph. At the same time, the architecture allows for incremental updates of only those exit paths which are affected by the change. That is, a recalculation of a complete area exit path is avoided because only the exit paths of those physical zones being affected by the situational change need to be recalculated.

Further, the decentralized architecture makes the computer system more robust against computer failure. In case a computer of the system fails because it gets hit by the fire or stops operating for any other reason, the remaining infrastructure is still in place and can perform the previously described operations. The failed computer may even be replaced by a backup computer which is located at a safe location and which may communicate with the area computer over the network, for example, in a wireless way.

The computer system further has at least one guidance generator component configured to generate evacuation instructions in compliance with any one of the first, second and area exit paths. Each computer in the system may have such a guidance generator. The generated evacuation instructions can be transmitted to output means, which are suitable to guide the people inside the populated areas safely to the exits from the area. Such output means can be signs, loudspeakers, floor plan displays for displaying the current exit path, chains of lights or any other device, which can be used to give dynamic guidance to the people in response to the results of the exit path calculations. For example, a loudspeaker may inform a group of people in a room of the physical zone that they need to wait three minutes and should then proceed to the staircase exit node on the right. A further announcement may follow when it is time for the people to start leaving the room. For example, the direction information may be supported by a chain of blinking lights in the floor of the physical zone. There may also be arrows or other signs attached to the walls or ceilings of the physical zone giving additional visual guidance.

In one embodiment, the computer system can have a profile registration component. For example, the area computer may incorporate this component. When a visitor (person) enters the physical area, the person may register her profile. The profile may include information about mental and motor capabilities or injuries of said person. The person may also register an identification number of a personal communication device, which can be used to send personal messages to the person. The profile can then be used as a further input for the calculating and determining steps to calculate/determine profile dependent first, second and area exit paths for the person. For example, if the person is handicapped, the person can be prioritized for evacuation and receive personal instructions to guide her first to the staircase. That is, the system may calculate individual exit paths according to the registered profile and transmit respective evacuation instructions directly to the personal communication device of the person.

In one aspect monitoring zone occupancy is supported within the physical zones in the populated area by, for example, using appropriate motion sensors or other sensors appropriate for counting people to determine people presence and/or room occupancy. The zone occupancy may serve as input for the calculating and determining steps performed by the various computers of the evacuation system to calculate/determine the first, second and area exit paths. The number of people to be navigated through the populated area at a certain time may depend on the respective capacity of connecting elements in the populated area. Therefore, the information about how many people are located in the populated area can help to prioritize the various exit paths in view of the crowd to be moved through. This may avoid jamming and panicking of people.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 is a simplified system architecture for evacuation support for a populated area according to one embodiment of the invention;
FIG. 2 illustrates a physical zone with potential exit paths in a normal evacuation situation;
FIG. 3 illustrates the physical zone with a calculated exit path in an emergency situation;
FIG. 4 is a block diagram of an embodiment of a zone computer;
FIG. 5 is a block diagram of an embodiment of an area computer;
FIG. 6 illustrates a multi-tier evacuation system according to one embodiment of the invention;
and
FIG. 7 is a simplified flow chart of a computer implemented method for evacuation support according to an embodiment of the invention.

### Detailed Description

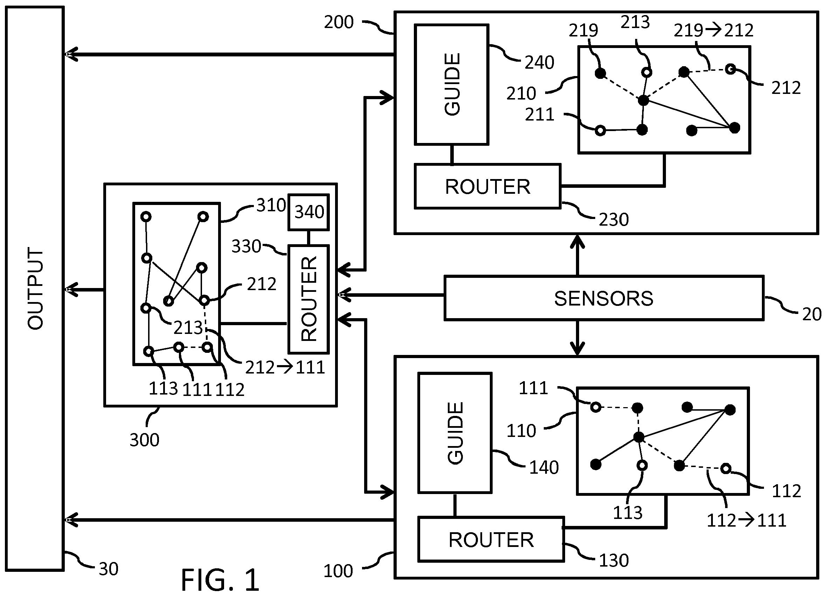

FIG. 1 is simplified system architecture for evacuation support for a populated area according to one embodiment of the invention. The corresponding system will also be referred to as evacuation support system or simply as evacuation system herein after.

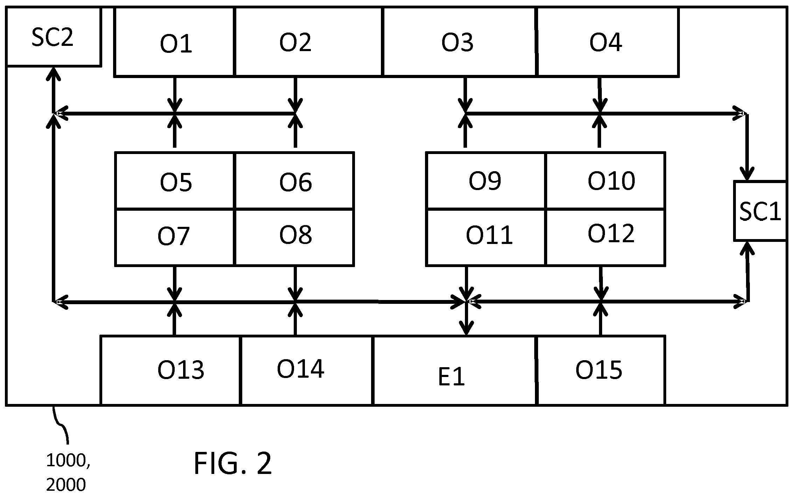

A first computer 100 stores a first graph 110 representing a first physical zone 1000 (cf. FIG. 2) in the populated area. The first graph 110 has at least one first exit node 111, 112, 113 corresponding to at least one exit SC1, SC2, E1 (cf. FIG. 2) from the first physical zone. For example, the first computer may be associated with a first floor in a multi-story building. It may be located at this floor but it can also be located in another location of the building or even outside the building, for example, in a data center. An exemplary floor plan of a physical zone 1000, 2000 is shown in FIG. 2. The physical zone 1000, 2000 includes office 01-015, two staircase exits SC1, SC2 and one elevator exit E1. The arrows in FIG. 2 show evacuation routes under normal conditions. Under normal conditions offices O1, O2 would evacuate through staircase exit SC2. Offices O11, 012, 015 would evacuate either through staircase exit SC1 or may use elevator exit E1. The first graph 110 includes nodes representing locations of the first physical zone which need to be evacuated (e.g., offices, open space, etc.). Such nodes are illustrated as black filled circles . It further includes first exit nodes 111, 112, 113, which correspond to real world exits from the first physical area. Such nodes are illustrated as unfilled circles. The nodes are connected by edges of the first graph 110. Such edges correspond to real world portions of potential exit paths. An edge between two nodes in the graph represents a physical connection between the respective location, which can be used to move or navigate people through the first physical zone. Edges can include the information regarding the capacity for persons/people to use the connection (e.g., number of persons per time).

The second computer 200 of the evacuation support system stores a second graph 210 representing a second physical zone 2000 (cf. FIG. 2) in the populated area. In the example of a building the second physical zone may correspond to the floor above the first physical zone. The arrangement of elements, such as offices, can be different in both zones. The second graph 210 may be similar to the first graph 110 and has at least one second exit node 211, 212, 213 (illustrated by unfilled circles) corresponding to at least one exit SC1, SC2, E1 (cf. FIG. 2) from the second physical zone 2000. In case that an exit of the first physical zone corresponding to a first exit node 112 is connected with an exit of the second physical zone corresponding to a second exit node 212 through a real world connecting element, such as a staircase, an elevator, a fire escape, a bridge, etc., the respective first 112, 113 and second exit nodes 212, 213 can be seen as connecting the first 110 and second graphs 210.

Sensors 20 may be placed in and around the populated area for monitoring the area. The sensor 20 may provide sensor data indicating a hazardous situation in the populated area. Such sensor data can be received by the computers of the evacuation system through appropriate standard sensor interfaces. Examples of sensors, which may be used to monitor hazardous situations, were given earlier.

The evacuation system further has an area computer 300. In the building example, the area computer 300 may be placed on the ground floor or the basement of the building. The area computer 300 is communicatively coupled with the first and second computers 100, 200 and with any further computer serving a similar purpose as the first and second computers. The area computer 300 stores a third graph 310. However, the third graph is functionally different from the first and second graphs. Whereas the first and second graphs represent physical zones of the populated area, the third graph 310, also referred to as area graph hereinafter, represents how the various physical zones are connected in the populated area. In other words, the area graph 310 includes all exit nodes 111, 112, 113, 212, 213, etc. of the first and second and further graphs 110, 210 representing physical zones. The edges between the nodes of the area graph 310 therefore correspond to real world connecting elements between the various physical zones. That is, the area computer 300 knows about all possible area exit paths which are available to get people from one physical zone to another physical zone.

The area computer 300 further has an interface to receive sensor data from sensors 20. The area computer may be connected with sensors monitoring the connecting elements between the various physical zones. Sensor data from such sensors may provide useful information about the use situation of such connecting elements. For example, the area computer 300 may receive sensor data from a smoke detector, temperature sensor and video camera installed in staircase SC2. If smoke is detected and the temperature exceeds a predefined threshold, the area computer 300 can detect a hazardous fire situation in staircase SC2. Any appropriate decision system which is able to evaluate sensor data for event detection can be used for such purpose. The hazardous situation may also be detected by anyone of the physical zone computers in a similar way. Such computers can then notify the area computer 300 about the detected hazardous situation. Based on the sensor data and the knowledge about the connecting elements represented connected first and second exit nodes 112, 212, an appropriate router component 330 of the area computer 300 can calculate an area exit path 212→111. For example, the router 330 can use a rule based calculation approach, which may take into account dependencies between various connecting elements and respective hazardous situations. For example, if a fire starts in one of the staircases, the area computer 300 can immediately exclude the respective exit nodes form the potential area exit paths. However, there may be dependencies affecting other connecting elements, too. For example, in case of fire, certain elevators must not be used. That is, besides eliminating the exit nodes representing the burning staircase SC2, the exit nodes representing the elevator E1 may also be disregarded for calculating the area exit path. As a result, the router 330 can determine all safe connections between the various physical zones in the populated area and determine all potentially safe area exit paths for moving people from one physical zone to another one. The area computer 300 can communicate the calculated areas exit path(s) to all physical zone computers of the evacuation system.

Each (physical) zone computer (e.g., first and second computers 100, 200) can now determine an exit path for the respective physical zone. For example a first exit path 112→111 (illustrated by dashed line) can be determined by a router 130 of the first computer 100 from the first graph 110 by taking into account the sensor data and the area exit path 212→112. In a similar way a router 230 of the second computer 200 can determine a second exit path 219→212 (dashed line) from the second graph 210. However, the router 130 of the first computer 100 may use a totally different routing algorithm than the router 230 of the second computer 200. This may be advantageous in cases where the "floor plans" of the first and second physical zones are very different. For example, in an amusement park an appropriate algorithm for calculating exit paths from an "adventure land" with many bridges and ponds may not work equally well for calculating exit paths for a physical zone "space ship" with many rooms, intermediate levels and dark spaces. In such case the first computer can use a routing algorithm optimized for a landscape environment whereas the second computer may use a routing algorithm optimized for complex building environments. Examples of such algorithms are given further down.

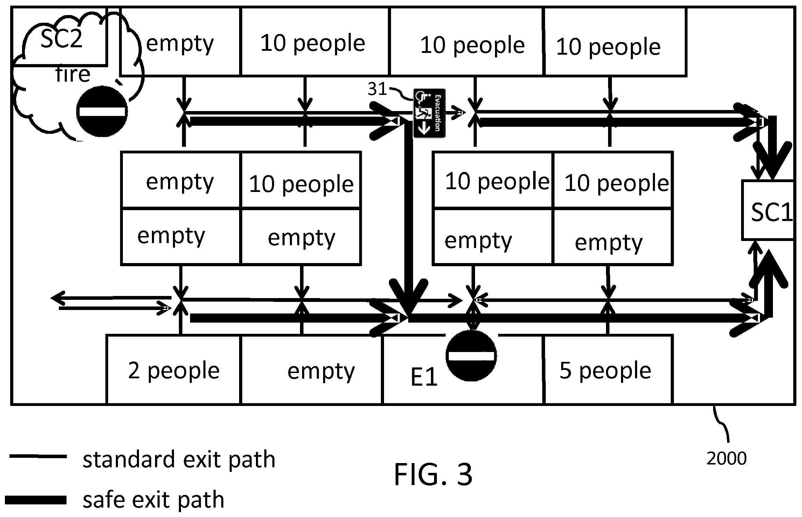

FIG. 3 shows an example of a routing result of a physical zone computer (first or second computer) for the physical zone with a calculated exit path in an emergency situation. In the example, a fire is detected blocking the exit SC2. The fire can either be in the staircase, in which case the area computer 300 has communicated to the zone computer that SC2 is excluded from the potential exit paths, or it may have been detected by the respective zone computer itself, in which case the zone computer has evaluated the respective sensor information from sensors place in the physical zone itself. A person skilled in the art can also derive detection of a hazardous situation based on a combination of sensor signals received by different computers of the evacuation system. Thin arrows stand for potential exit paths a person would likely take into consideration, without the support of the routing functions of the evacuation system. Bold arrows stand for an exit path calculated by the router of the zone computer. In case of a fire alarm, without system support people would likely first try the closest exit. That is, people occupying offices on the left side of the physical zone would likely first try to get to SC2, which is blocked by the fire (illustrated by the blocking sign). Once the people notice that the exit SC2 is blocked they would likely turn around and rush to the closest exit SC1 by taking the shortest path, which corresponds to the corridor in the upper part of FIG. 3. However, this may lead to overcrowding the corridor and creating panic because the offices exiting to the upper corridor are occupied with 60 people when the fire alarm starts (10 people in each of the offices O2-O4, O6, O9, O10 cf. FIG. 2). On the other hand offices in the part of the physical zone illustrated by the lower part of the FIG. 3 are mainly empty or occupied by only a few people. That is, it would be desirable to navigate a part of the people from the upper corridor to the lower corridor to better make use of the capacity of the available routes. The bold arrows show a possible result of an exit path calculation performed by the router of the respective zone computer. When using a capacity-constrained routing algorithm the router can use information about the maximum capacity of each corridor and distribute the flow of people accordingly to achieve a more balanced use of the various routes. The router knows from the area exit path that SC2 is blocked and that also elevator E1 cannot be used in the current situation. Therefore, both potential exit nodes are removed from consideration when calculating the exit path(s) for the physical zone. If for example, the throughput capacity of each corridor is 40 people per minute, the router can guide the 40 people occupying the offices O3, O4, O9, O10 towards SC1. However the 20 people coming from the offices O2, O6 are now directed towards the lower corridor in order to avoid a situation with too many people in the upper corridor. Those 20 people will be merged with the 7 people coming from offices 013, 015. Further, also exit SC1 has a maximum throughput capacity. Assuming that this exit only has a throughput capacity of 20 people per minute. In this case the routing algorithm can further optimize the movement of the people into sub-groups. For example, at first the 20 people from the offices O4, O10 are directed to SC1. Then, 20 people from the lower corridor may be guided towards the exit. Then, 20 people from the offices O3, O9 coming through the upper corridor and finally the remaining 7 people coming through the lower corridor can be evacuated through the staircase SC1.

Turning back to FIG. 1, the router 230 of the second (zone) computer 200 calculates one or more exit paths (e.g., dashed line exit path 219→212) for the physical zone by taking into account the available safe second exit nodes 212 and relevant sensor data received from sensors 20. Such sensor data may also include information about the distribution of people (number of people, room occupancy, etc.) in the physical zone, which may affect the result of the exit path calculation dependent on the capacity of the various edges in the second graph as well as the capacity of the relevant edges 212→112 of the area graph.

A similar calculation can be performed by the first (zone) computer 100 to get the people coming through the staircase SC1, which corresponds to first exit node 112 in the first graph 110, finally to the second exit node 111, which may represent an exit from the building. The respective exit path 112→111 is shown as a dashed sequence of edges accordingly. The calculation performed by the router 130 of the first computer also needs to take into account the people occupying the first physical zone.

Advantageously, each computer of the evacuation system has a guidance generator component 140, 240, 340 which is configured to generate evacuation instructions in compliance with any one of the first, second and area exit paths 112→111, 219→212, 212→112. That is, for example, the second (zone) computer 200 may generate respective visual or audio instructions, which are then sent to the respective output means 30 for informing the people occupying the second physical zone. Visual instructions may be directed to visual output means, such as electronic displays, electronic signs or any other visual or light based output means. Audio instructions may be sent to loudspeaker devices. The person skilled in the art may also use instructions for tactile output means (e.g., vibrating elements in the floor), which may be useful in case of bad visibility conditions (e.g., because of smoke). In the example scenario of FIG. 3 loudspeakers in the respective offices may be used to inform the users about when to start evacuation and which direction to take. In the corridors signs may be used to indicate the direction to take. For example, the people leaving the offices O2, O6 may be prompted with a blinking arrow sign 31 to the right in order to leave the upper corridor and move to the lower corridor. This may be supported by blinking light chains in the walls or floor of the physical zone, accordingly. The calculated exit paths may also be highlighted on displays showing a floor plan of the physical area. The area computer 300 may send corresponding evacuation instructions to appropriate output means placed in the connecting elements.

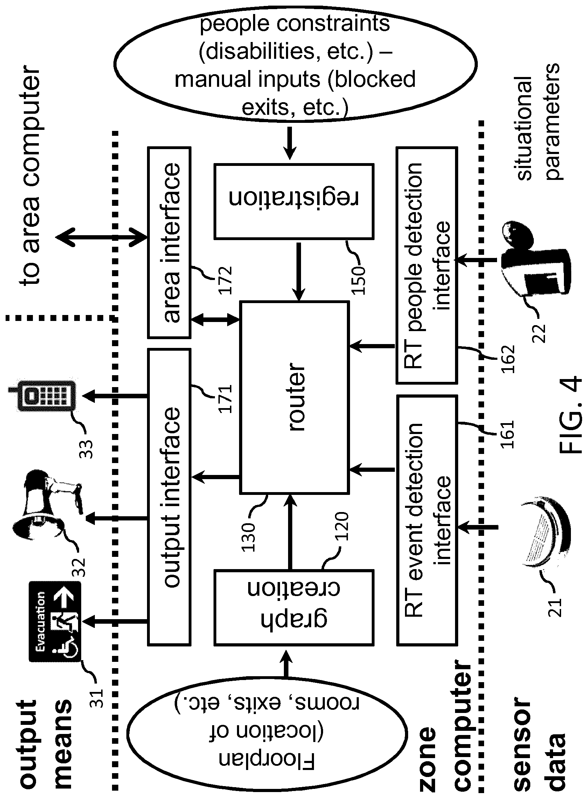

FIG. 4 is a block diagram showing an embodiment of a zone computer, such as for example, the first or second computers of FIG. 1. Components of the zone computer are using the reference signs from the first computer in FIG. 1, although any other zone computer can be configured in a similar way. The functional blocks of the zone computer are shown between the horizontal dotted lines. The zone computer can receive sensor data reflecting situational parameters about situations from within the populated area. Such sensor data may be of an event detection type or of a people detection type. Event detection type data may reflect the type and location of a specific event, which may be related to an emergency situation. For example, the smoke detector 21 can provide sensor data associated with an event which caused the formation of smoke. People detection type data may relate to the location or counting of people. For example, the motion detector 22 can provide data about the location of people and/or the number of people. The sensor data are received by the zone computer via respective interfaces. A real time event detection interface 161 can be used to receive event detection type data. A real time people detection interface 162 can be used to receive people detection type data. Both types of data can provide useful input for the router to calculate an exit path to escape from the respective physical area, as described in detail under FIGs. 1, 3.

Optionally, the zone computer may further include a graph creation component 120. The graph creation component 120 can create a graph (e.g., first or second graphs 110, 210) from a map, such as a floor plan, which includes elements of the physical zone, such as the location of rooms, exits, corridors, obstacles, plants, etc. Algorithms for graph extraction from maps are known in the art and can be looked up in: H. W. Hamacher and S. A. Tjandra. Mathematical modelling of evacuation problems - a state of the art (in M. Schreckenberg and S. D. Sharma, editors, Pedestrian and Evacuation Dynamics, pages 227-266, Berlin, 2002. Springer) or in Tsetsos, V., Anagnostopoulos, C., Kikiras, P. and Hadjiefthymiades, S. (2006)'Semantically enriched navigation for indoor environments' (Int. J. Web and Grid Services, Vol. 2, No. 4, pp.453-478). The created zone graph is then stored in an appropriate zone graph data structure in a memory of the zone computer, which can be accessed by the router 130 for exit path calculation. Zone graphs may also be loaded into this data structure from external data sources.

A further optional component of the zone computer is the registration component 150. The registration component 150 allows registering profiles which may be relevant for exit path calculation performed by the zone computer. At least user profiles and zone profiles are supported by the registration component 150. Further profile types may be supported if required.

A user profile may store information about a person which is currently in the populated area. For example, when the person enters the populated area (e.g., building), the person may provide an ID to the evacuation system by using an access card or a finger print or any other means for identification to register as a visitor of the populated area. The person can further register profile data associated with the ID. For example, a person profile data structure may include information about the person's name, the person's communication device, intended whereabouts, intended retention time, motor-mental capabilities, current situation, etc. Such information may be entered manually into the system or may be automatically provided to the system through the identification means used by the person. The person profile may be permanently stored in the evacuation system or may be automatically deleted when the person leaves the populated area again. Person profile information can provide useful information for the exit path calculation. The router 130 can retrieve information about registered users from the personal profile data structure and can calculate/determine an individual exit path for the respective person taking into account the person's profile.

For example, if a person's profile indicates that the person is handicapped and is using a wheel chair, the router will not consider an exit node leading to a staircase as an exit option for this person. Rather the person may be directed to an elevator or to a fire resistant room in the zone to wait for being rescued. If a person's profile indicates that the person is suffering from claustrophobia the router may ignore exit nodes leading to an elevator, if the number of people using this exit path is high and, therefore, the elevator would be crowded. One option would be to direct the affected person towards exit nodes leading to a staircase. Another option is to lead the claustrophobic person to the elevator if the elevator has a certain minimum size but, at the same time, dynamically reduce the capacity property of the elevator. This would result in only a few persons populating the elevator exit path, whereas the constrained-based routing algorithm would ensure that other people are routed to other exits of the physical zone if available. If, for example, a person is currently using crutches, the router may prioritize the evacuation of this person and direct the person to a staircase earlier than other occupants of the physical zone to give the person the appropriate time for descending.

In case the router 130 calculates/determines an individual exit path for a registered person, corresponding individual evacuation instructions may be transmitted to the personal communication device 33 of the person through the output interface 171 of the zone computer. For example, the evacuation instructions may be sent directly to a person's phone. For example, the instructions may be verbal and sent by Short Message Service (SMS) or e-mail. The evacuation instructions may also be in a graphic format transmitting a map of the physical area to the person's smart phone and highlighting the exit path. This may be supported by corresponding audio instructions while the person is navigating according to the transmitted evacuation instructions as known from traditional navigation systems. An advantage of the profile registration feature is that the router 130 may exactly know where the person currently is in the physical zone because the person may be detected by, for example, a radio frequency identification (RFID) reader detecting the person's access card when entering a specific room. The registered person may also be tracked by camera sensors or motion sensors 22 in the physical zone and any location change of the person can be logged in the person's profile information. Even the person's smart phone 33 may act as a sensor, too. For example the smart phone may run its own navigation application to track the person's current location in the physical zone at any time. In case of emergency, the current location can be communicated to the router for individual exit path calculation.

The registration component may also be used to register zone profile with routing relevant information with regards to properties of the physical zone. For example, in one zone there may be construction or paint work going on, which leads to a temporary closing of a corridor or exit. Such situations may be entered via an appropriate interface of the registration component into a zone profile data structure. The zone profile data structure may include any zone property which may become relevant for exit path calculation (e.g., size, throughput capacity, etc.). Such zone properties may not necessarily lead to the exclusion of certain nodes of edges when calculating the exit path. The properties may also affect the capacity of such graph elements, which is considered by the capacity-constrained routing algorithm. For example, if paint work is only going on only on one side of a corridor then the corridor may still be used as an exit path. However, the capacity of the corridor may be affected and be much lower than before.

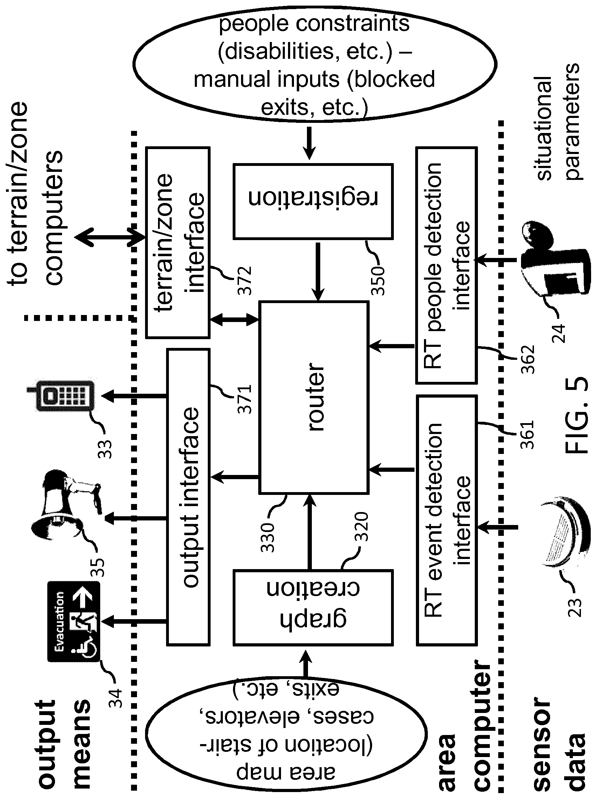

Any one of the computers of the evacuation system may include such a registration component. However, for reducing registration activities it may be advantageous to use the registration component 350 (cf. FIG. 5) of the area computer, because the area computer can provide any registration activity to each connected zone computer. Nevertheless registration can also be supported at the zone level, for example, for registering data which is only relevant to the respective zone.

The zone computer can calculate any number of individual zone exit paths for registered users but at the same time general zone exit paths for navigating groups of people through the physical zone can be determined. The corresponding evacuation instructions are then transmitted through the output interface to the respective output means (e.g. sign 31, loudspeaker 32, mobile device 33, etc.) as described before.

The area interface 172 is coupling the zone computer with a corresponding area computer, from which the information about potential area exit paths is received as an input for zone exit path calculation. Further, the zone computer can provide relevant information to the area computer via the area interface 172. For example, profile information or information about the situational parameters tracked by the sensors 21, 22 may be of interest for the area computer as well.

FIG. 5 is a block diagram of an embodiment of an area computer, such as for example, the area computer 300 of FIG. 1. The components of the area computer are similar to those of the zone computers. One difference is at the input level in that the detection interfaces 361, 362 may receive sensor data reflecting situational parameters associated with the situation in the connecting elements of the area rather than about the situation in the physical zones. That is, smoke detector 23 and motion/counting sensor 24 may be advantageously placed in connecting elements like staircase, elevators, bridges, etc., connecting different zones. As further input to the router 330 for area exit path calculation the terrain/zone interface 372 may receive information from the various zone computers about the number of people in the respective physical zones. Further, information about safe exit nodes in the respective physical zones may be received through the same interface from the connected zone computers. Information received through the terrain/zone interface 372 will be referred to as zone status data in general.

The optional graph creation component 320 can be used to create a graph 310 from an area map by, for example, mapping connecting elements such as staircases, elevators, bridges, gates or other exits to corresponding nodes and edges of the graph 310. The graph creation component 320 may use similar algorithms as the graph creation components of the zone computers. However, the created graph 310 may be limited to connecting exit nodes of the respective zone graphs 110, 210 (cf. FIG. 1) and area exit nodes 111. In other words, the area graph includes all potential connections between the exit nodes and can therefore be used to calculate an area exit path taking into account all zones in the populated area without the need to have any specific knowledge about the various zone graphs. A recalculation of safe area exit paths in case that an exit node has to be excluded because of a hazardous situation can be performed computationally efficient because only the alternatives using the remaining exit nodes need to be evaluated in view of the received zone status data. In case that the area exit path calculation results in updated area exit paths, the updated area exit paths are communicated to the affected zone computers through the terrain/zone interface 372, where they can be used by the respective zone computer routers for updating zone exit paths for the physical zones.

The output interface 371 can provide evacuation instruction to output means which are placed in the connecting elements of the populated area but also directly to any communication device of registered users. This may be important in a situation, where a certain group of people is in a connecting element, for example a staircase, moving from a first physical zone to a second (target) physical zone according to the area exit path calculation provided by the router 330. If the target exit node of the target physical zone for this group becomes impassable while the group of people is in the connecting element, e.g., because of an explosion in the target physical zone, the router 330 of the area computer recalculates the area exit path and needs to inform this group of people accordingly. For example, the people need to be redirected back to their previous physical zone, where the respective zone router recalculates an alternative zone exit path. Evacuation instructions in such a scenario need to be sent to output means 34, 35 placed in the respective connecting elements. For registered users they may also be sent directly to the communication device 33 of the corresponding user.

The terrain/zone interface 372 may further connect the area computer to a terrain computer. For example, multiple areas (e.g., buildings) may be included in a terrain (e.g., amusement park, university campus, etc.). In other words, the hierarchical arrangement of zones and area, or zone computers and area computer as described in FIG. 1, can be expanded to a further layer (or tier). For example, multiple areas can be considered as a terrain, so that a terrain computer cooperates with area computers.

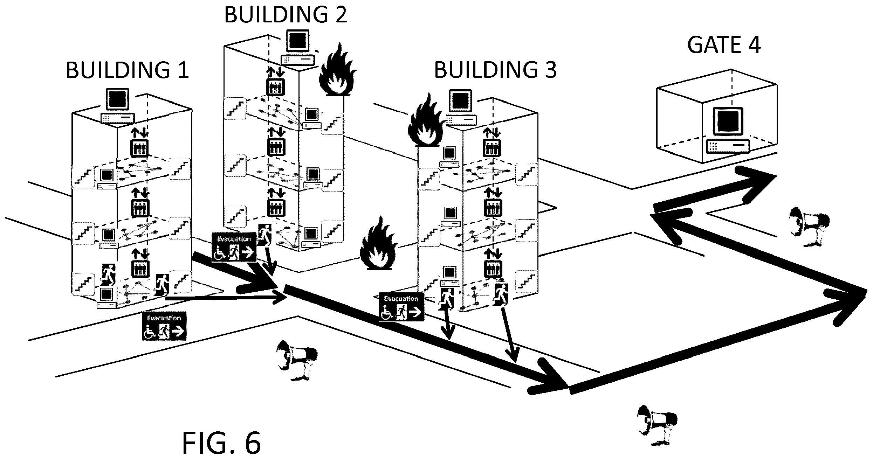

FIG. 6 illustrates such a multi-tier evacuation system according to one embodiment of the invention. The figure shows a terrain with four buildings (multi-story buildings 1 to 3, gate 4). Each building corresponds to a populated area as described above. Each multi-story building has an area computer (illustrated by the mid-sized computer symbols on the roof of each building) and further has a zone computer on each floor (illustrated the small computer symbol on the respective floors or physical zones). Each area server can calculate area exit paths for the respective building and each zone computer can calculate corresponding zone exit paths by taking into account respective exit nodes and connecting elements as previous disclosed. In the figure connecting elements are shown as stairs symbols and elevator symbols. Building or area exits are shown as exit symbols with a running person. In case of an emergency affecting a multi-story building the evacuation system can calculate safe exit paths for people inside the populate area as described earlier.

Assuming now that a fire which started in building 2 is spreading to building 3. Burning building parts may fall on the pathway between building 2 and building 3, which is leading towards the gate 4. In this case a terrain computer (illustrated by the big computer symbol in the gate 4 building) may be used to calculate a safe terrain exit path from the premises (terrain).

For this purpose the terrain computer can store a terrain graph, which may be extracted from a map of the terrain. The terrain graph can be compared to the area graph in that it includes all area exit nodes from the areas (e.g., buildings) included in the terrain in a similar way as the area graphs include all zone exit nodes of the respective physical zones. Further it includes terrain exit nodes which correspond to real world exits (e.g., gate 4) from the terrain. Edges of the terrain graph correspond to connecting elements between the various area exit nodes and terrain exit nodes. In the example such connecting elements are pathways on the premises leading from one building to another building and finally connecting the buildings with the terrain exit which is at the gate 4 building. The terrain computer can also receive sensor data reflecting the situation of the terrain outside the buildings. For example, a video surveillance system can detect burning parts on the pathway between buildings 2 and 3. Based on such sensor data and the knowledge about the connecting elements between the various area exit nodes a router of the terrain computer can calculate the terrain exit path in a similar way as the router of the area computer can calculate the area exit paths. One calculated terrain exit path is shown in the figure with bold arrows leading towards the gate 4. The thin arrows are leading the people from the area exits towards the main terrain exit path. They may therefore also be considered as elements of the terrain exit path. In other words, the terrain computer can calculate a separate terrain exit path for each area exit on the terrain. Signs, speakers or any other appropriate output means (cf. corresponding symbols in FIG. 6) can be placed at appropriate locations on the populated terrain to guide people from area exits towards the main terrain exit path and finally towards terrain exits. The information exchange between area computers and the terrain computer is similar to the information exchange between the zone computers and their respective area computer. A person skilled in the art can adapt the multi-tier architecture with different exit path calculation levels based on the previous disclosure. The number or tiers is not limited to three as in the given example but can be extended to any number, which is appropriate to cover a corresponding populated region. This scalability is achieved by replicating the exit path calculation at a given level by using a graph including the exit nodes of the previous level and the exit nodes of the given level. Further, constraints and/or profiles as described in the example of the area computer with multiple zone computers can be used at any level to optimize exit path calculation.

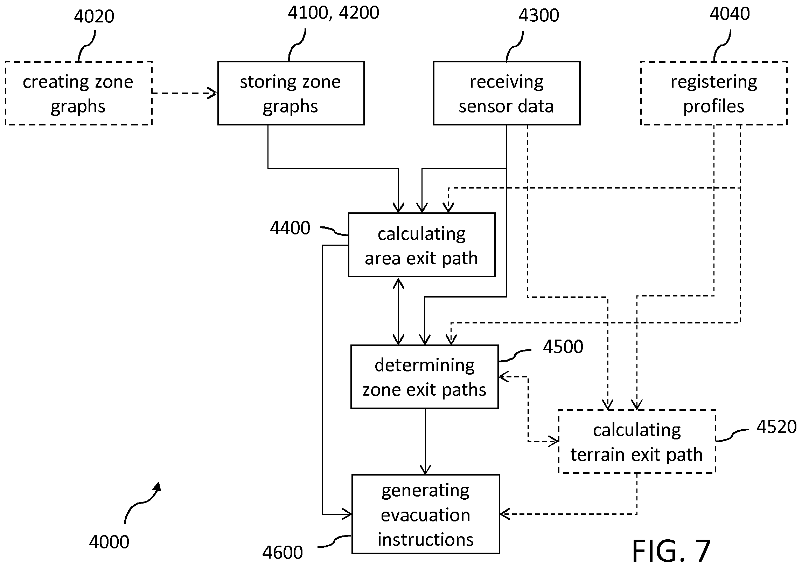

FIG. 7 is a simplified flow chart of a computer implemented method 4000 for evacuation support of a populated area according to an embodiment of the invention. The method includes the various steps already described along with the previous figures. Optional steps are illustrated by dashed lines and dashed blocks. For reason of simplicity the zone graph related steps 4020, 4100, and 4200 are shown as a single flow chart element. However, the person skilled in the art will understand that the steps may be performed for each physical zone, area or terrain, separately. The storing zone graphs 4100, 4200, receiving sensor data 4300 and optional registering profiles 4040 steps are independent from each other. That is, they may be performed concurrently or in any deliberate sequence. In case the evacuation system performs the optional creating zone graphs steps 4020, such steps are performed prior to storing the graphs. Graphs in general may be stored as appropriate data structures in a memory portion of the respective computer. Such data structures include the information about the nodes and edges of the graph. Zone graphs may also be imported from other external sources, such as map services. The area computer(s) can then calculate 4400 area exit path(s) based on the zone exit nodes and received sensor data indicating situational parameters of the populated area. For calculating the area exit path(s) the area computer may create a respective area graph, which includes the zone exit nodes of the respective physical zones, the area exit nodes and edges representing connecting elements between the corresponding various exits. Optionally, the area exit path calculation can use profile information, which has been registered 4040 previously. For example, people profile information can be used to calculate individual exit paths for registered users. Area or zone profile information can include constraints of the respective zone or area in the exit path calculation. For example, blocked connection elements, capacity constraints or other properties may serve as inputs for corresponding capacity-constrained routing algorithms used for exit path calculation. The area exit path information together with sensor data form the respective physical zones is then used by the zone computers to determine 4500 corresponding zone exit paths as disclosed earlier. Changes of the situation in a physical zone (e.g., the accessibility of a specific exit from the physical zone) may also feed back into the calculation of area exit paths as indicated by the bidirectional arrow. Such changes may be detected automatically through corresponding sensor data or may be input as profile information by an operator of the evacuation system. A recalculation of the exit paths may lead to a redetermination of zone exit paths. In a three-tier implementation of the evacuation system as described under FIG. 6, terrain exit path(s) may be calculated 4520 in a similar way as the area exit path(s). In this embodiment, area graphs and a terrain graph relate to each other in a similar way as zone graphs relate to an area graph. As explained earlier, any number of tiers is possible to cover large and complex populated regions. This multi-tier architecture enables a high scalability of the evacuation system as well as high flexibility with regards to near-real-time recalculation of exit paths in case of changing situational parameters. Finally, based on the calculated/determined exit paths the evacuation system generates evacuation instructions, which are tailored to appropriate output means for informing the people in the populated area about the safest exit paths in an evacuation scenario.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1. A computer implemented method (4000) for evacuation support for a populated area, comprising:
storing (4100), on a first computer (100), a first graph (110) representing a first physical zone (1000) in the populated area, the first graph (110) having at least one exit node (111, 112, 113) corresponding to at least one exit from the first physical zone;
storing (4200), on a second computer (200), a second graph (210) representing a second physical zone (2000) in the populated area, the second graph (210) having at least one exit node (211, 212, 213) corresponding to at least one exit (2011, 2012, 2013) from the second physical zone (2000);
storing (4100), on an area computer (300), a third graph (310) representing how physical zones are connected in the populated area, the third graph (310) having a plurality of exit nodes corresponding to exit nodes in the first graph (110), and a plurality of exit nodes corresponding to exit nodes in the second graph (210), the edges of the graph (310) corresponding to connecting elements between physical zones;
receiving (4300) sensor data indicating a situation in the populated area;
calculating (4400), on said area computer (300), an area exit path (212->112) from the third graph (310) based on the sensor data;
determining (4500), on the first and second computers, respectively, at least one first zone exit path (112->111) from the first graph (110) and at least one second zone exit path (219->212) from the second graph (210) based on the sensor data and the area exit path (212->112); and
generating (4600) evacuation instructions in compliance with the first, second and area exit paths (112->212, 219->212, 212->112).

2. The computer implemented method of claim 1 wherein the at least one first exit path is determined using a first routing algorithm and the at least one second exit path is determined using a second routing algorithm which is different from the first routing algorithm.

3. The computer implemented method of claim 1 or claim 2, further comprising:
registering (4040) a profile of a person staying in the populated area, wherein the profile serves as input for the calculating and determining steps to calculate/determine profile dependent first, second and area exit paths for the person, and wherein the respective evacuation instructions are transmitted to a personal communication device of the person.

4. The computer implemented method of any one of the previous claims, further comprising:
monitoring zone occupancy within the physical zones in the populated area, wherein the zone occupancy serves as input for the calculating and determining steps to calculate/determine the first, second and area exit paths.

5. The computer implemented method of claim 4, wherein the zone occupancy comprises people presence and/or room occupancy.

6. The computer implemented method of any one of the previous claims, wherein the evacuation instructions are posted to appropriate output means.

7. The computer implemented method of any one of the previous claims, wherein the determining step uses a capacity-constrained routing algorithm.

8. The computer implemented method of any one of the previous claims, wherein locations within the first and second physical zones are mapped to nodes of the first and second graphs, respectively, and potential routes for moving from one location to another location are mapped to edges of the first and second graphs, respectively.

9. The computer implemented method of claim 8, wherein the nodes and edges of the first and second graphs have properties indicating a transition time from one location to another location.

10. The computer implemented method of any one of the previous claims, further comprising: creating (4020) the first and second graphs from maps representing the first and second physical zones, respectively, prior to the storing steps.

11. A distributed computer program product that when loaded into memories of computing devices and executed by processors of the computing devices executes the steps of the computer implemented method according to of anyone of the claims 1 to 10.

12. A computer system for evacuation support for a populated area, comprising:
a first computer (100) configured to store a first graph (110) representing a first physical zone in the populated area, the first graph having at least one exit node (111, 112, 113) corresponding to at least one exit from the first physical zone;
a second computer (200) configured to store a second graph (210) representing a second physical zone in the populated area, the second graph having at least one exit node (211, 212, 213) corresponding to at least one exit from the second physical zone;
an area computer (300) configured to store a third graph (310) representing how physical zones are connected in the populated area, the third graph (310) having a plurality of exit nodes corresponding to exit nodes in the first graph (110), and a plurality of exit nodes corresponding to exit nodes in the second graph (210), the edges of the graph (310) corresponding to connecting elements between physical zones;
at least one interface component (161, 162, 361, 362) configured to receive sensor data indicating a situation in the populated area;
the area computer (300) further configured to calculate an area exit path (212->112) from the third graph (310) based on the sensor;
the first and second computers further configured to determine a first exit path (112->111) from the first graph and a second exit path (212->112) from the second graph, respectively, based on the sensor data and the area exit path; and
at least one guidance generator component (140, 240, 340) configured to generate evacuation instructions in compliance with the first, second and area exit paths (112->212, 219->212, 212->112).

13. The computer system of claim 12, further comprising:
at least one registration component (150, 350) configured to register profiles being useful for exit path calculation.

14. The computer system of claim 12 or 13, further comprising:
at least one graph creation component (120, 320) configured to create the first and second graphs from maps representing the first and second physical zones.

15. A computer system for evacuation of a populated terrain, comprising:
a first computer system according to claim 12, wherein the first computer system is configured for evacuation of a first area of the terrain, the first area having at least one first area exit at the end of a respective area exit path;
a second computer system according to claim 12, wherein the second computer system is configured for evacuation of a second area of the terrain, the second area having at least one second area exit at the end of a respective area exit path; a terrain computer to calculate, based on sensor data indicating a situation in the populated terrain and based on connected first and second area exit nodes representing area exits of the terrain in a terrain graph, a terrain exit path; and
at least one terrain guidance generator component configured to generate evacuation instructions in compliance with the terrain exit path.

## Patentansprüche

1. Rechnerimplementiertes Verfahren (4000) zur Räumungsunterstützung für ein besiedeltes Gebiet, umfassend:
Speichern (4100), an einem ersten Rechner (100), eines ersten Graphen (110), der eine erste physikalische Zone (1000) im besiedelten Gebiet darstellt, wobei der erste Graph (110) mindestens einen Ausgangsknoten (111, 112, 113) ausweist, der mindestens einem Ausgang aus der ersten physikalischen Zone entspricht;
Speichern (4200), an einem zweiten Rechner (200), eines zweiten Graphen (210), der eine zweite physikalische Zone (2000) im besiedelten Gebiet darstellt, wobei der zweite Graph (210) mindestens einen Ausgangsknoten (211, 212, 213) ausweist, der mindestens einem Ausgang (2011, 2012, 2013) aus der zweiten physikalischen Zone (2000) entspricht;
Speichern (4100), an einem Bereichsrechner (300), eines dritten Graphen (310), der darstellt, wie physikalische Zonen im besiedelten Gebiet verbunden sind, wobei der dritte Graph (310) eine Vielzahl von Ausgangsknoten, die Ausgangsknoten im ersten Graphen (110) entsprechen, und eine Vielzahl von Ausgangsknoten, die Ausgangsknoten im zweiten Graphen (210) entsprechen, aufweist, wobei die Ränder des Graphen (310) Verbindungselementen zwischen physikalischen Zonen entsprechen;
Empfangen (4300) von Sensordaten, die eine Situation im besiedelten Gebiet angeben;
Berechnen (4400), am Bereichsrechner (300), eines Bereichs-Ausgangspfads (212->112) aus dem dritten Graphen (310) auf Basis der Sensordaten;
Bestimmen (4500), jeweils an dem ersten und zweiten Rechner, mindestens eines ersten Zonen-Ausgangspfads (112->111) aus dem ersten Graphen (110) mindestens eines zweiten Zonen-Ausgangspfads (219->212) aus dem zweiten Graphen (210) auf Basis der Sensordaten und des Bereichs-Ausgangspfads (212->112); und
Generieren (4600) von Räumungsanweisungen in Übereinstimmung mit dem ersten, zweiten und Bereichs-Ausgangspfad (112->212, 219->212, 212->112).

2. Rechnerimplementiertes Verfahren nach Anspruch 1, wobei der mindestens eine erste Ausgangspfad unter Verwendung eines ersten Routing-Algorithmus bestimmt wird und der mindestens eine zweite Ausgangspfad unter Verwendung eines zweiten Routing-Algorithmus bestimmt wird, der sich vom ersten Routing-Algorithmus unterscheidet.

3. Rechnerimplementiertes Verfahren nach Anspruch 1 oder Anspruch 2, ferner umfassend: Erfassen (4040) eines Profils einer Person, die sich im besiedelten Gebiet aufhält, wobei das Profil als Eingabe für die Berechnungs- und Bestimmungsschritte dient, um profilabhängige erste, zweite und Bereichs-Ausgangspfade für die Person zu berechnen/bestimmen, und wobei die jeweiligen Räumungsanweisungen an eine persönliche Kommunikationsvorrichtung der Person übermittelt werden.

4. Rechnerimplementiertes Verfahren nach einem der vorhergehenden Ansprüche, ferner umfassend:
Überwachen der Zonenbelegung innerhalb der physikalischen Zonen im besiedelten Gebiet, wobei die Zonenbelegung als Eingabe für die Berechnungs- und Bestimmungsschritte dient, um den ersten, zweiten und Bereichs-Ausgangspfad zu berechnen/bestimmen.

5. Rechnerimplementiertes Verfahren nach Anspruch 4, wobei die Zonenbelegung Personenanwesenheit und/oder Raumbelegung umfasst.

6. Rechnerimplementiertes Verfahren nach einem der vorhergehenden Ansprüche, wobei die Räumungsanweisungen an geeigneten Ausgabeeinrichtungen veröffentlicht werden.

7. Rechnerimplementiertes Verfahren nach einem der vorhergehenden Ansprüche, wobei der Bestimmungsschritt einen kapazitätsbeschränkten Routing-Algorithmus verwendet.

8. Rechnerimplementiertes Verfahren nach einem der vorhergehenden Ansprüche, wobei Standorte innerhalb der ersten und zweiten physikalischen Zone Knoten des jeweils ersten und zweiten Graphen zugeordnet werden, und potentielle Wege zum Bewegen von einem Standort zu einem anderen Standort Rändern des jeweils ersten und zweiten Graphen zugeordnet werden.

9. Rechnerimplementiertes Verfahren nach Anspruch 8, wobei die Knoten und Ränder des ersten und zweiten Graphen Eigenschaften aufweisen, die eine Übergangszeit von einem Standort zu einem anderen Standort angeben.

10. Rechnerimplementiertes Verfahren nach einem der vorhergehenden Ansprüche, ferner umfassend: Erzeugen (4020) des ersten und zweiten Graphen aus Karten, die jeweils die erste und zweite physikalische Zone vor den Speicher-Schritten darstellen.

11. Verteiltes Rechnerprogrammprodukt, das, wenn es in Speichern von Rechnervorrichtungen geladen und durch Prozessoren der Rechnervorrichtungen ausgeführt wird, die Schritte des rechnerimplementierten Verfahrens nach einem der Ansprüche 1 bis 10 ausführt.

12. Rechnersystem zur Räumungsunterstützung für ein besiedeltes Gebiet, umfassend:
einen ersten Rechner (100), der so konfiguriert ist, dass er einen ersten Graphen (110) speichert, der eine erste physikalische Zone im besiedelten Gebiet darstellt, wobei der erste Graph mindestens einen Ausgangsknoten (111, 112, 113) aufweist, der mindestens einem Ausgang aus der ersten physikalischen Zone entspricht;
einen zweiten Rechner (200), der so konfiguriert ist, dass er einen zweiten Graphen (210) speichert, der eine zweite physikalische Zone im besiedelten Gebiet darstellt, wobei der zweite Graph mindestens einen Ausgangsknoten (211, 212, 213) ausweist, der mindestens einem Ausgang aus der zweiten physikalischen Zone entspricht;
einen Bereichsrechner (300), der so konfiguriert ist, dass einen dritten Graphen (310) speichert, der darstellt, wie physikalische Zonen im besiedelten Gebiet verbunden sind, wobei der dritte Graph (310) eine Vielzahl von Ausgangsknoten, die Ausgangsknoten im ersten Graphen (110) entsprechen, und eine Vielzahl von Ausgangsknoten, die Ausgangsknoten im zweiten Graphen (210) entsprechen, aufweist, wobei die Ränder des Graphen (310) Verbindungselementen zwischen physikalischen Zonen entsprechen;
mindesten eine Schnittstellenkomponente (161, 162, 361, 362) die so konfiguriert ist, dass sie Sensordaten empfängt, die eine Situation im besiedelten Gebiet angeben;
wobei der Bereichsrechner (300) ferner so konfiguriert ist, dass er einen Bereichs-Ausgangspfad (212->112) aus dem dritten Graphen (310) auf Basis des Sensor berechnet;
wobei der erste und zweite Rechner ferner so konfiguriert sind, dass sie jeweils einen ersten Ausgangspfad (112->111) aus dem ersten Graphen und einen zweiten Ausgangspfad (212->112) aus dem zweiten Graphen auf Basis der Sensordaten und des Bereichs-Ausgangspfads bestimmen; und
mindestens eine Führungsgeneratorkomponente (140, 240, 340), die so konfiguriert ist, dass sie Räumungsanweisungen in Übereinstimmung mit dem ersten, zweiten und Bereichs-Ausgangspfad (112->212, 219->212, 212->112) generiert.

13. Rechnersystem nach Anspruch 12, ferner umfassend:
mindestens eine Erfassungskomponente (150, 350), die so konfiguriert ist, dass sie Profile erfasst, die nützlich zur Ausgangspfadberechnung sind.

14. Computersystem nach Anspruch 12 oder 13, ferner umfassend:
mindestens eine Graphenerzeugungskomponente (120, 320), die so konfiguriert ist, dass sie den ersten und zweiten Graphen aus Karten erzeugt, die die erste und zweite physikalische Zone darstellen.

15. Rechnersystem zur Räumungsunterstützung eines besiedeltes Geländes, umfassend:
ein erstes Rechnersystem nach Anspruch 12, wobei das erste Rechnersystem zur Räumung eines ersten Bereichs des Geländes konfiguriert ist, wobei der erste Bereich mindestens einen ersten Bereichsausgang am Ende eines jeweiligen Bereichs-Ausgangspfads aufweist;
ein zweites Rechnersystem nach Anspruch 12, wobei das zweite Rechnersystem zur Räumung eines zweiten Bereichs des Geländes konfiguriert ist, wobei der zweite Bereich mindestens einen zweiten Bereichsausgang am Ende eines jeweiligen Bereichs-Ausgangspfads aufweist;
einen Geländerechner, um, auf Basis von Sensordaten, die eine Situation im besiedelten Gelände angeben, und auf Basis von verbundenen ersten und zweiten Bereichsausgangsknoten, die Bereichs-Ausgänge des Geländes in einem Geländegraphen darstellen, einen Gelände-Ausgangspfad zu berechnen; und mindestens eine Geländeführungsgeneratorkomponente, die so konfiguriert ist, dass sie Räumungsanweisungen in Übereinstimmung mit dem Gelände-Ausgangspfad generiert.

## Revendications

1. Procédé mis en oeuvre par ordinateur (4000) destiné à l'assistance d'évacuation pour une région peuplée, comprenant :
le stockage (4100), sur un premier ordinateur (100), d'un premier graphique (110) représentant une première zone physique (1000) dans la région peuplée, ledit premier graphique (110), possédant au moins un noeud de sortie (111, 112, 113) correspondant à au moins une sortie de la première zone physique ;
le stockage (4200), sur un second ordinateur (200), d'un deuxième graphique (210) représentant une seconde zone physique (2000) dans la région peuplée, ledit deuxième graphique (210) possédant au moins un noeud de sortie (211, 212, 213) correspondant à au moins une sortie (2011, 2012, 2013) de la seconde zone physique (2000) ;
le stockage (4100), sur un ordinateur régional (300), d'un troisième graphique (310) représentant la façon dont les zones physiques sont reliées dans la région peuplée, ledit troisième graphique (310) possédant une pluralité de noeuds de sortie correspondant aux noeuds de sortie dans le premier graphique (110) et une pluralité de noeuds de sortie correspondant aux noeuds de sortie dans le deuxième graphique (210), les bords du graphique (310) correspondant aux éléments de liaison entre les zones physiques;
la réception (4300) de données de capteur indiquant une situation dans la région peuplée ;
le calcul (4400), sur ledit ordinateur régional (300), d'un chemin de sortie de région (212-> 112) à partir du troisième graphique (310) sur la base des données de capteur ;
la détermination (4500), sur les premier et second ordinateurs, respectivement, d'au moins un premier chemin de sortie de zone (112->111) à partir du premier graphique (110) et d'au moins un second chemin de sortie de zone (219->212) à partir du second graphique (210) sur la base des données de capteur et du chemin de sortie de région (212->112) ; et
la génération (4600) d'instructions d'évacuation en conformité avec les premier et second chemins de sortie et le chemin de sortie de région (112->212, 219->212, 212->112).

2. Procédé mis en oeuvre par ordinateur selon la revendication 1, ledit au moins un premier chemin de sortie étant déterminé à l'aide d'un premier algorithme de routage et ledit au moins un second chemin de sortie étant déterminé à l'aide d'un second algorithme de routage qui est différent du premier algorithme de routage.

3. Procédé mis en oeuvre par ordinateur selon la revendication 1 ou 2, comprenant en outre :
l'enregistrement (4040) d'un profil d'une personne séjournant dans la région peuplée, ledit profil servant d'entrée pour les étapes de calcul et de détermination pour calculer/déterminer les premier et second chemins de sortie et le chemin de sortie de région dépendant du profil pour la personne, et lesdites instructions d'évacuation respectives étant transmises à un dispositif de communication personnel de la personne.

4. Procédé mis en oeuvre par ordinateur selon l'une quelconque des revendications précédentes, comprenant en outre :
la surveillance de l'occupation de zone à l'intérieur des zones physiques dans la région peuplée, ladite occupation de zone servant d'entrée pour les étapes de calcul et de détermination pour calculer/déterminer les premier et second chemins de sortie et le chemin de sortie de région.

5. Procédé mis en oeuvre par ordinateur selon la revendication 4, ladite occupation de zone comprenant une présence de personnes et/ou une occupation de chambre.

6. Procédé mis en oeuvre par ordinateur selon l'une quelconque des revendications précédentes, lesdites instructions d'évacuation étant expédiés vers des moyens de sortie appropriés.

7. Procédé mis en oeuvre par ordinateur selon l'une quelconque des revendications précédentes, ladite étape de détermination utilisant un algorithme de routage sous contrainte de capacité.

8. Procédé mis en oeuvre par ordinateur selon l'une quelconque des revendications précédentes, des emplacements dans les première et seconde zones physiques étant associés aux noeuds des premier et deuxième graphiques, respectivement, et des routes potentielles permettant de se déplacer d'un endroit à un autre endroit étant associées aux bords des premier et deuxième graphiques, respectivement.

9. Procédé mis en oeuvre par ordinateur selon la revendication 8, lesdits noeuds et lesdits bords des premier et deuxième graphiques possèdent des propriétés indiquant un temps de transition d'un endroit à un autre endroit.

10. Procédé mis en oeuvre par ordinateur selon l'une quelconque des revendications précédentes, comprenant en outre : la création (4020) des premier et deuxième graphiques à partir de cartes représentant les première et seconde zones physiques, respectivement, avant les étapes de stockage.

11. Produit-programme informatique distribué qui, lorsque il est chargé dans les mémoires des dispositifs informatiques et exécuté par des processeurs des dispositifs informatique exécute les étapes du procédé mise en oeuvre par ordinateur selon l'une quelconque des revendications 1 à 10.

12. Système informatique destiné à l'assistance d'évacuation pour une région peuplée, comprenant :
un premier ordinateur (100) configuré pour stocker un premier graphique (110) représentant une première zone physique dans la région peuplée, ledit premier graphique possédant au moins un noeud (111, 112, 113) de sortie correspondant à au moins une sortie de la première zone physique ;
un second ordinateur (200) configuré pour stocker un second graphique (210) représentant une seconde zone physique dans la région peuplée, ledit deuxième graphique possédant au moins un noeud (211, 212, 213) de sortie correspondant à au moins une sortie de la seconde zone physique ;
un ordinateur régional (300) configuré pour stocker un troisième graphique (310) représentant la façon dont des zones physiques sont reliées dans la région peuplée, ledit troisième graphique (310) possédant une pluralité de noeuds de sortie correspondant aux noeuds de sortie dans le premier graphique (110) et une pluralité de noeuds de sortie correspondant aux noeuds de sortie dans le deuxième graphique (210), les bords du graphique (310) correspondant aux éléments de liaison entre des zones physiques ;
au moins un composant d'interface (161, 162, 361, 362) configuré pour recevoir des données de capteur indiquant une situation dans la région peuplée ;
l'ordinateur régional (300) configuré en outre pour calculer un chemin de sortie de région (212->112) à partir du troisième graphique (310) sur la base du capteur ;
les premier et second ordinateurs configurés en outre pour déterminer un premier chemin de sortie (112->111) à partir du premier graphique et un second chemin de sortie (212->112) à partir du deuxième graphique, respectivement, sur la base des données de capteur et du chemin de sortie de région ; et
au moins un composant générateur de guidage (140, 240, 340) configuré pour générer des instructions d'évacuation en conformité avec les premier et second chemins de sortie et le chemin de sortie de région (112->212, 219->212, 212->112).

13. Système informatique selon la revendication 12, comprenant en outre :
au moins un composant d'enregistrement (150, 350) configuré pour enregistrer des profils utiles pour le calcul de chemin de sortie.

14. Système informatique selon la revendication 12 ou 13, comprenant en outre :
au moins un composant de création de graphique (120, 320) configuré pour créer les premier et deuxième graphiques à partir de cartes représentant les première et seconde zones physiques.

15. Système informatique destiné à l'évacuation d'un terrain peuplé, comprenant :
un premier système informatique selon la revendication 12, ledit premier système informatique étant configuré pour l'évacuation d'une première région du terrain, ladite première région possédant au moins une première sortie de région au niveau de l'extrémité d'un chemin de sortie de région respectif ;
un second système informatique selon la revendication 12, ledit second système informatique étant configuré pour l'évacuation d'une seconde région du terrain, ladite seconde région possédant au moins une seconde sortie de région à l'extrémité d'un chemin de sortie de région respectif ; un ordinateur de terrain pour calculer, sur la base des données de capteur indiquant une situation dans le terrain peuplé et sur la base des premier et second noeuds de sortie de région représentant des sorties de région du terrain dans un graphique de terrain, un chemin de sortie de terrain ; et au moins un composant générateur de guidage de terrain configuré pour générer des instructions d'évacuation en conformité avec le chemin de sortie de terrain.
